# EUROPEAN PATENT APPLICATION

(11) **EP 4 806 618 A1**
(43) Date of publication of application: **16.09.2026**
(21) Application number: 24888521.2
(22) Date of filing: 22.10.2024
(51) Int. Cl.: B29C 45/76

(54) **CONTROL METHOD FOR INJECTION MOLDING MACHINE, MANUFACTURING METHOD FOR INJECTION MOLDED ARTICLE, AND INJECTION MOLDING SYSTEM**

(30) Priority: 09.11.2023 JP 2023191420
(71) Applicant: Canon Kabushiki Kaisha, Tokyo 146-8501 (JP)
(72) Inventor: IIJIMA, Gaku, Tokyo 146-8501 (JP); TANAKA, Masato, Tokyo 146-8501 (JP); KUROKAWA, Kazunari, Tokyo 146-8501 (JP)
(74) Representative: TBK
(86) International application number: PCT/JP2024/037581
(87) International publication number: WO 2025/100223

(57) **Abstract**

A control method for an injection molding machine, which is a control method for a manufacturing apparatus executed by a control device, the manufacturing apparatus including the injection molding machine and a mold attached to the injection molding machine, the control method including: a collection step for collecting a plurality of process data measured during a first injection molding from a plurality of sensors provided to the manufacturing apparatus; an acquisition step for acquiring a plurality of parameters related to a plurality of material properties of a resin material used in injection molding, based on the process data; and a control step for setting molding conditions for a second injection molding that follows the first injection molding, based on the plurality of parameters.

## Description

### [Technical Field]

The present disclosure relates to a control method for an injection molding machine and to an injection molding system.

### [Background Art]

In conventional injection molding machines, a resin material is melted primarily by heating with a heater, and the molten resin is metered by the rotation and retraction of a screw driven by a motor. The metered molten resin is then filled into the mold by the forward movement of the screw driven by the motor and pressurized. Afterward, the molten resin is sufficiently cooled and solidified in the mold and removed from the mold as a plastic molded product.

The output of the heater used to melt the resin material is controlled to reach a set temperature, based on detection by a thermocouple provided in a cylinder section. Furthermore, resin metering is performed simultaneously with melting, by retracting the screw until a set position thereof is reached. At that time, the molten resin is controlled to reach a predetermined pressure state by detection with a pressure sensor, such as a load cell, provided on the screw. The filling operation of the molten resin is also controlled based on screw position information, and operations are performed so that the screw movement speed and movement amount follow set values. After filling, a pressurizing operation called holding pressure is performed. This is intended to generate compensatory flow to compensate for volume shrinkage due to the shrinkage of the molten resin. This pressurizing operation is generally controlled by detection with the aforementioned load cell or the like provided on the screw, and the screw advances according to the set pressure value.

The abovementioned set values for heater temperature, screw movement speed, movement amount, pressure, etc., are called molding conditions. The molding conditions have to be determined by the user of the equipment, depending on the type of resin material used, the volume of the molded product, the specifications of the mold, etc. The user primarily determines the molding conditions to obtain the desired molded product quality. The molding conditions can be changed by the user even while the injection molding machine is in mass production operation. However, deriving molding conditions to ensure quality requires a great deal of experience and knowledge, so changes during mass production tend to be avoided.

Changes to molding conditions during mass production are necessary when external disturbances destabilize the molded product quality. In particular, it is preferable that the dimensions of the molded product remain stable.

It has long been pointed out that variations in material properties significantly affect the quality of molded products, especially dimensions thereof. Accordingly, techniques have been proposed to stabilize quality by detecting changes in material properties during mass production and adjusting molding conditions according to these changes.

For example, PTL 1 discloses a technique in which a plunger and a sensor that measure viscosity are newly installed in a plasticizing device of an injection molding machine to calculate viscosity during molding, and the speed, temperature, and back pressure conditions are adjusted based on the calculation results.

### [Citation List]

### [Patent Literature]

[PTL 1] Japanese Patent Laid-Open No. 2005-238519

### [Summary of Invention]

### [Technical Problem]

The inventors' research has shown that variations in molded products are not prevented by controlling molding conditions based on only one specific material property. Since many material properties affect the quality of molded products, when insufficient molded product quality is obtained due to variations in a plurality of material properties, sufficient quality improvement is not achieved if molding conditions are controlled during molding by detecting a single material property.

The present disclosure has been made in view of the problems of the conventional techniques described above and aims to provide an injection molding technique that can achieve stable molded product quality even when material properties vary.

### [Solution to Problem]

A first aspect of the present disclosure is a control method for an injection molding machine, which is a manufacturing apparatus executed by a control device, the manufacturing apparatus including an injection molding machine and a mold attached to the injection molding machine, the control method including: a collection step for collecting a first pressure sensor value obtained from a first pressure sensor provided in a plasticizing section of the injection molding machine, a second pressure sensor value obtained from a second pressure sensor provided in a resin flow path inside a mold, and a temperature sensor value obtained from a temperature sensor that is provided near the second pressure sensor and detects a temperature of a resin material; and a control step for setting molding conditions for injection molding on a basis of a relationship between a first pressure sensor value P₁ and a second pressure sensor value P₂ when the temperature sensor value is at least a glass transition temperature Tg of the resin material during an injection step and a holding pressure step in injection molding.

A second aspect of the present disclosure is a control method for an injection molding machine, the control method being executed by a control device, the control method including: a collection step for collecting a first pressure sensor value obtained from a first pressure sensor provided in a plasticizing device of the injection molding machine, a second pressure sensor value obtained from a second pressure sensor provided in a resin flow path inside a mold, and a temperature sensor value obtained from a temperature sensor that is provided near the second pressure sensor and detects a temperature of a resin material; and a control step for changing molding conditions of the injection molding machine based on a difference P₁ - P₂ between a first pressure sensor value P₁ and a second pressure sensor value P₂ when the temperature sensor value is at least a glass transition temperature Tg of the resin material during an injection step and a holding pressure step in molding.

A third aspect of the present disclosure is a control method for an injection molding machine, which is a manufacturing apparatus executed by a control device, the manufacturing apparatus including an injection molding machine and a mold attached to the injection molding machine, the control method including: a collection step for collecting a pressure sensor value obtained from a pressure sensor provided in a resin flow path inside the mold, a temperature sensor value obtained from a temperature sensor that is provided near the pressure sensor and detects a temperature of a resin material, and a screw pressurization force value of the injection molding machine; and a control step for setting molding conditions for injection molding based on a relationship between a pressure sensor value P₃ and a screw pressurization force value Ps of the injection molding machine when the temperature sensor value decreases to not more than Tg + 10°C during a holding pressure step in injection molding, the Tg being a glass transition temperature of the resin material.

A fourth aspect of the present disclosure is a control method for an injection molding machine, which is a manufacturing apparatus executed by a control device, the manufacturing apparatus including an injection molding machine and a mold attached to the injection molding machine, the control method including: a collection step for collecting a pressure sensor value obtained from a pressure sensor provided in a resin flow path inside the mold and a screw position of the injection molding machine; and a control step for setting molding conditions for injection molding on the basis of a relationship between a change amount ΔLs of the screw position and a change amount ΔP₄ of the pressure sensor value during an injection step in injection molding.

A fifth aspect of the present disclosure is a control method for an injection molding machine, which is a manufacturing apparatus executed by a control device, the manufacturing apparatus including an injection molding machine and a mold attached to the injection molding machine, the control method including: a collection step for collecting a pressure sensor value obtained from a pressure sensor provided in a resin flow path inside the mold, and a temperature sensor value obtained from a temperature sensor that is provided near the pressure sensor and detects a temperature of a resin material; and a control step for setting molding conditions for injection molding on a basis of a relationship between a pressure sensor value P₅ when a gate of the mold is sealed, a pressure sensor value P₆ when a molded product reaches a temperature not more than a load deflection temperature, and an injection volume Vi during a holding pressure step and a cooling step in injection molding.

A sixth aspect of the present disclosure is a control method for an injection molding machine, which is a manufacturing apparatus executed by a control device, the manufacturing apparatus including an injection molding machine and a mold attached to the injection molding machine, the control method including: a collection step for collecting a pressure sensor value obtained from a pressure sensor provided in a resin flow path inside the mold, and a temperature sensor value obtained from a temperature sensor that is provided near the pressure sensor and detects a temperature of a resin material; and a control step for setting molding conditions for injection molding on a basis of a relationship between a pressure sensor value P₅ when a gate of the mold is sealed, a pressure sensor value P₆ when a molded product reaches a temperature not more than a load deflection temperature, and a molded product weight W_{A} during a holding pressure step and a cooling step in injection molding.

### [Advantageous Effects of Invention]

According to the present disclosure, stable molded product quality can be achieved even when a plurality of material properties vary.

### [Brief Description of Drawings]

[Fig. 1]

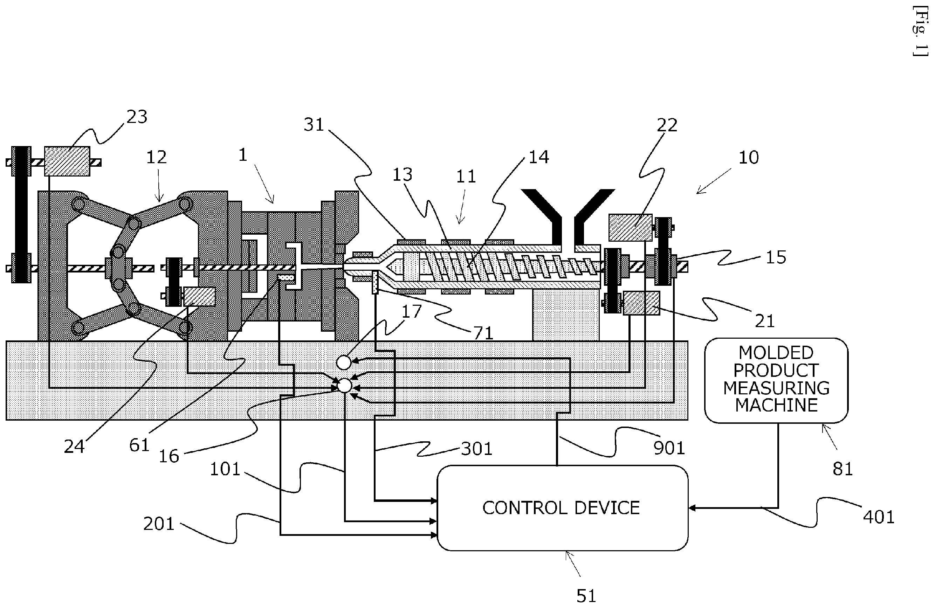

   Fig. 1 is a configuration diagram of an injection molding system having a control device in Example 1.
[Fig. 2]

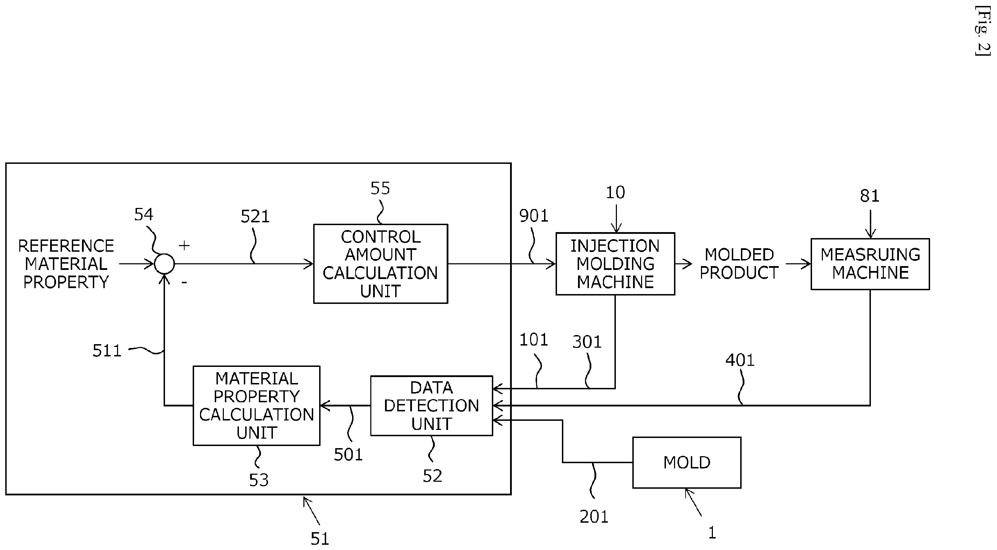

   Fig. 2 is a control block diagram in Example 1.
[Fig. 3]

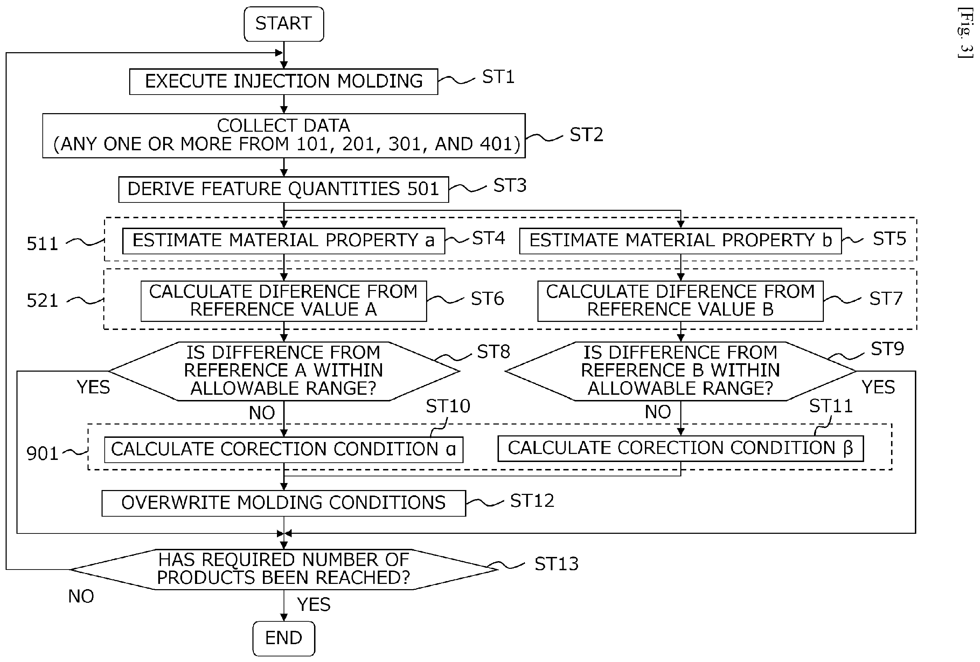

   Fig. 3 is a flowchart diagram in Example 1.
[Fig. 4]

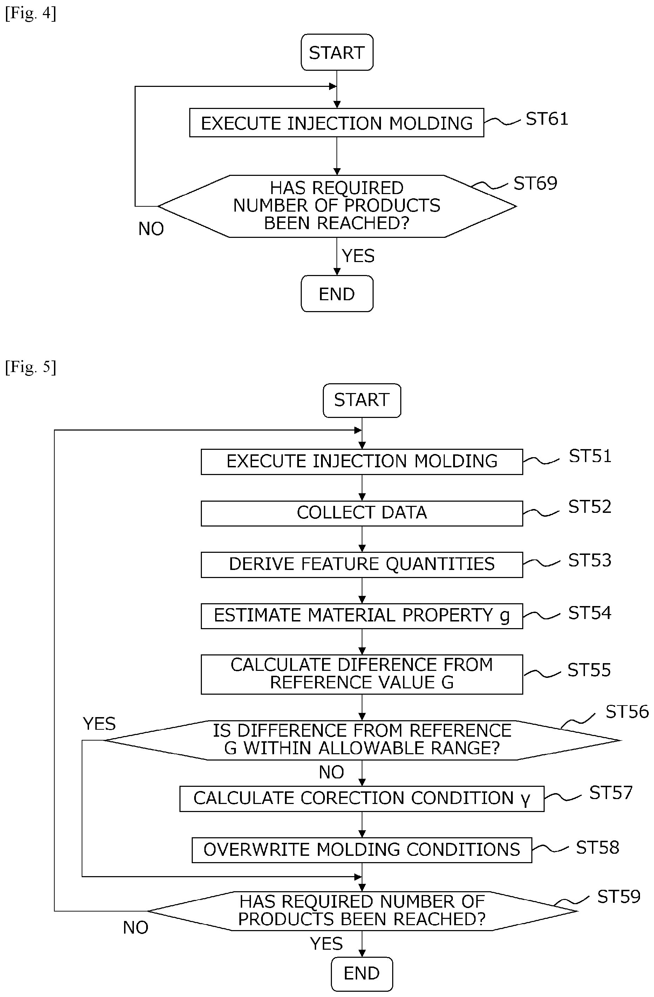

   Fig. 4 is a flowchart diagram of injection molding in Comparative Example 1.
[Fig. 5]
   Fig. 5 is a flowchart diagram of injection molding in Comparative Example 2.
[Fig. 6]

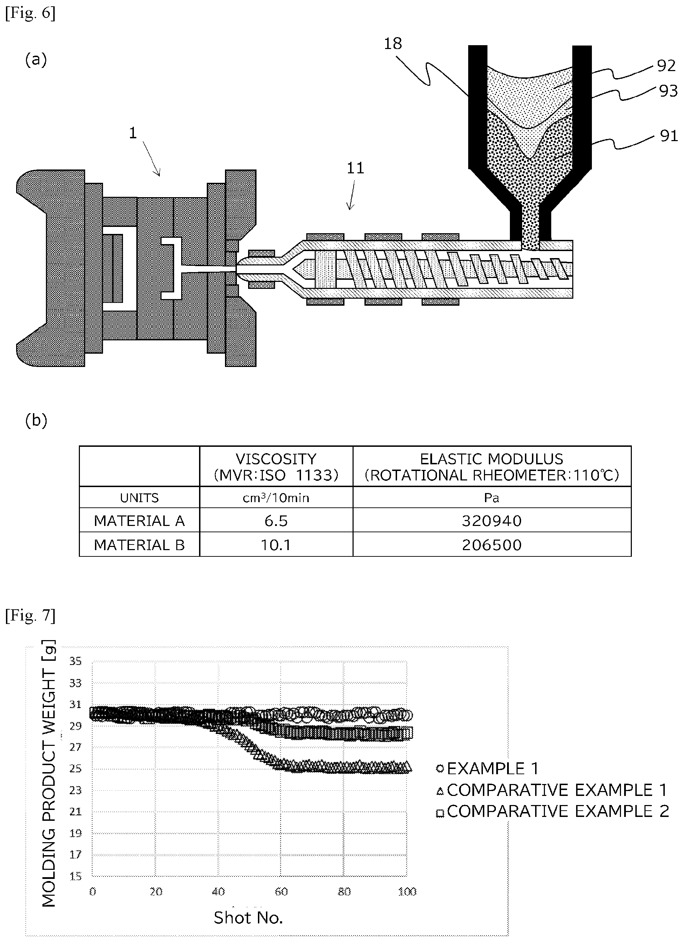

   Fig. 6 is a diagram representing the configuration of Test Example 1.
[Fig. 7]
   Fig. 7 shows the measurement results of the molding product weight in Test Example 1.
[Fig. 8]

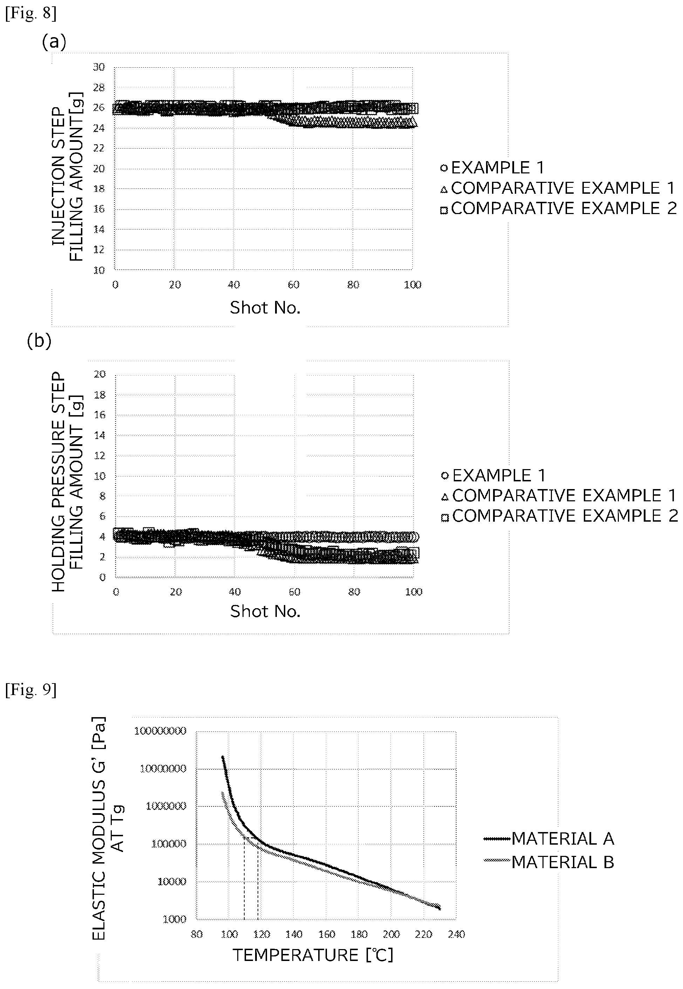

   Fig. 8 illustrates the molded product weight in Test Example 1 in detail.
[Fig. 9]
   Fig. 9 is an example of measuring the elastic modulus in Test Example 1.
[Fig. 10]

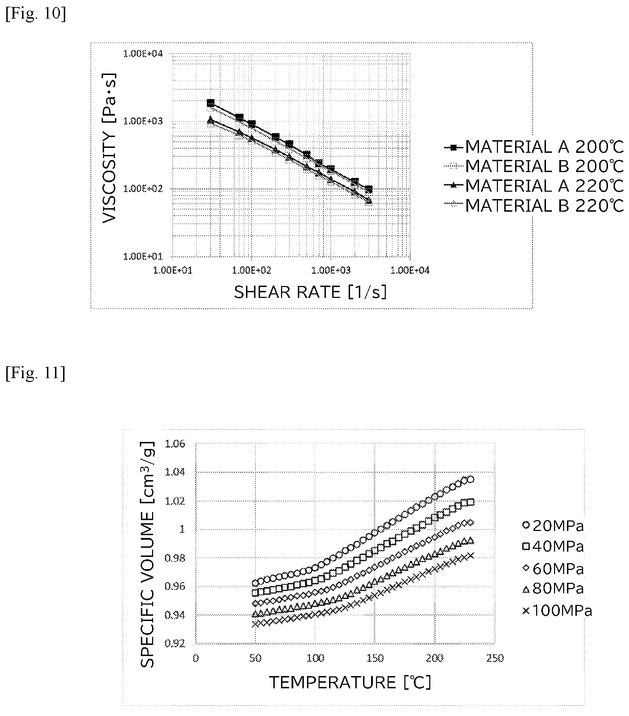

   Fig. 10 is an example of measuring the viscosity of the resin material in Test Example 1.
[Fig. 11]
   Fig. 11 is an example of measuring the shrinkage characteristic in Test Example 1.
[Fig. 12]

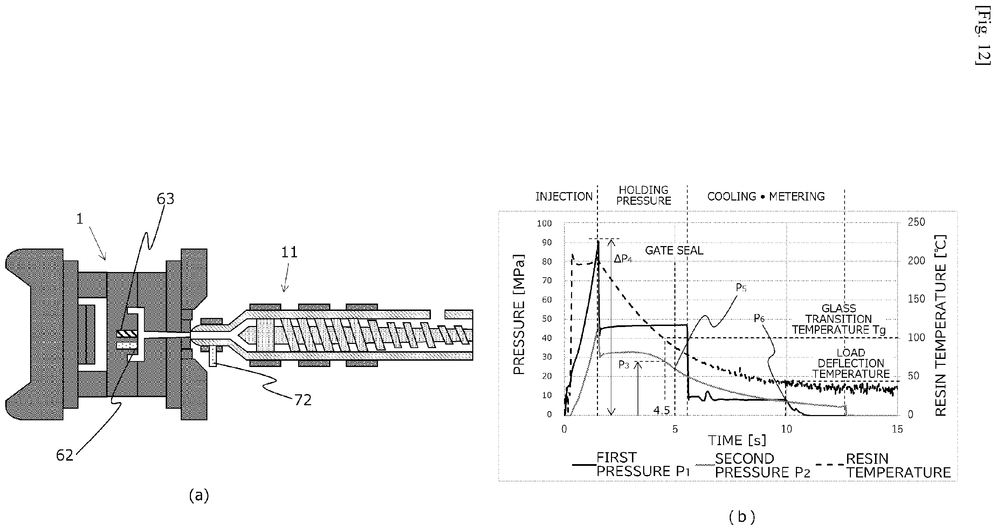

   Figs. 12(a) and 12(b) are diagrams representing the configuration of Test Examples 2 to 5.
[Fig. 13]

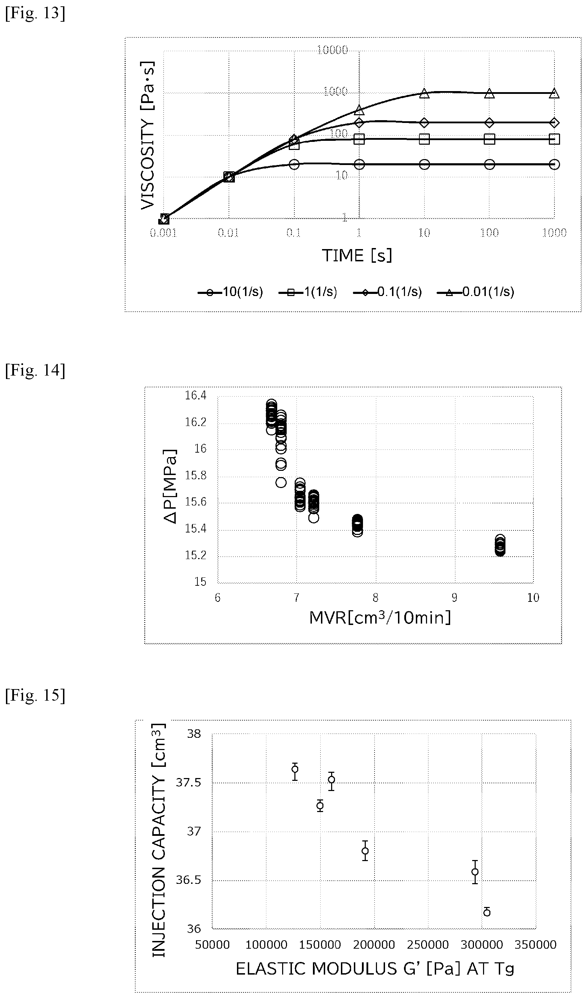

   Fig. 13 is a diagram representing the time dependence of viscosity.
[Fig. 14]
   Fig. 14 is a diagram representing the correlation between viscosity (MVR) and differential pressure ΔP in Example 2.
[Fig. 15]
   Fig. 15 is a diagram representing the correlation between the elastic modulus at Tg and the injection capacity in Example 3.
[Fig. 16]

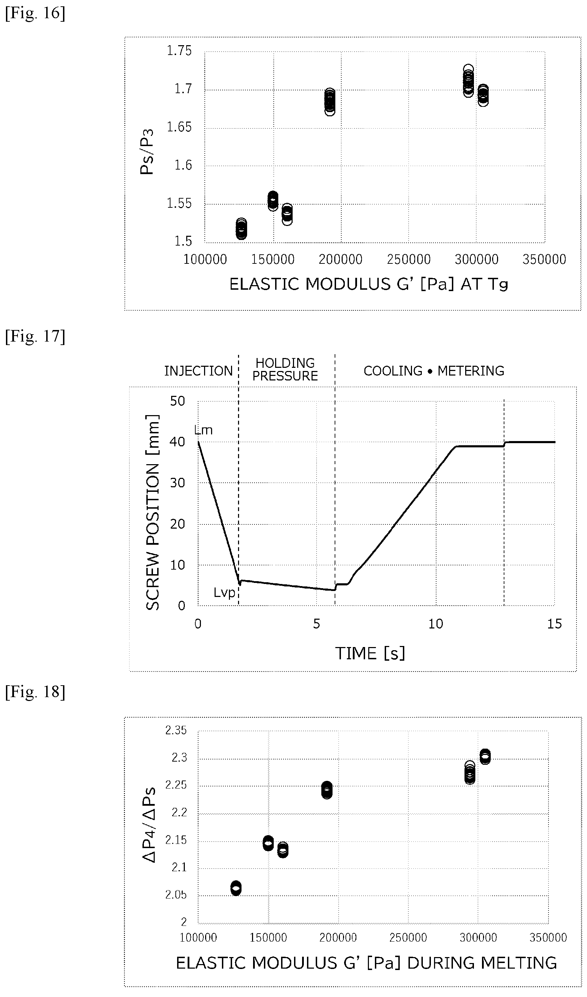

   Fig. 16 is a diagram representing the correlation between the elastic modulus at Tg and the elastic modulus parameter Ps/P₃ in Example 3.
[Fig. 17]
   Fig. 17 is a graph plotting the time change of screw position in Test Example 3.
[Fig. 18]
   Fig. 18 is a diagram representing the correlation between the elastic modulus during melting and the elastic modulus parameter ΔP₄/ΔLs in Example 4.
[Fig. 19]

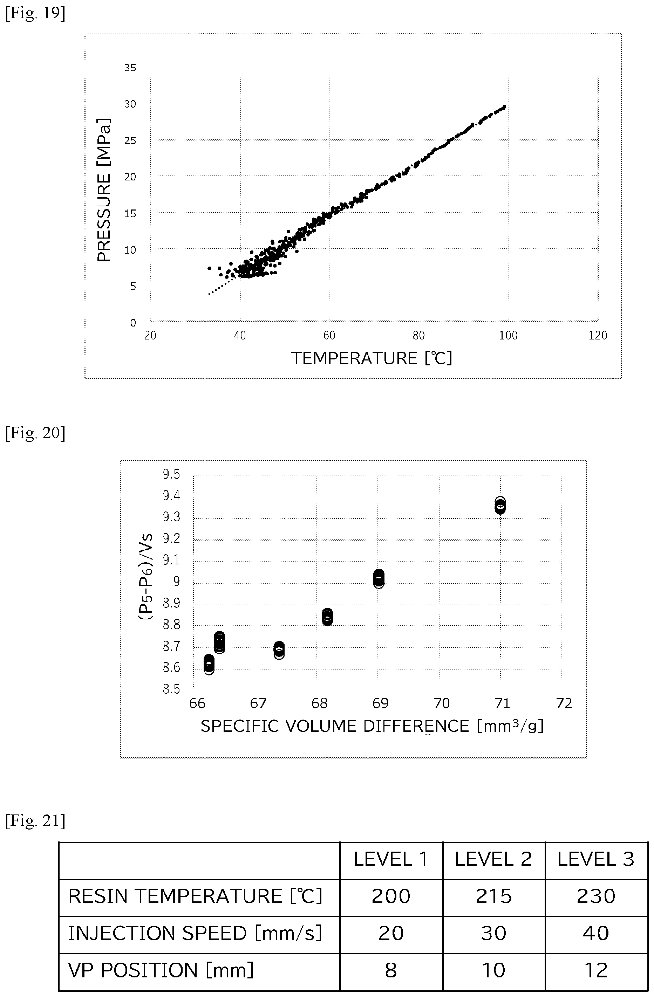

   Fig. 19 is a diagram representing the relationship between the resin temperature and the pressure after 5.0 sec in Test Example 4.
[Fig. 20]
   Fig. 20 is a diagram representing the correlation between the specific volume difference and the shrinkage rate parameter (P₅ - P₆)/Vi in Example 5.
[Fig. 21]
   Fig. 21 shows the molding conditions during the pre-test operation in Test Example 5.
[Fig. 22]

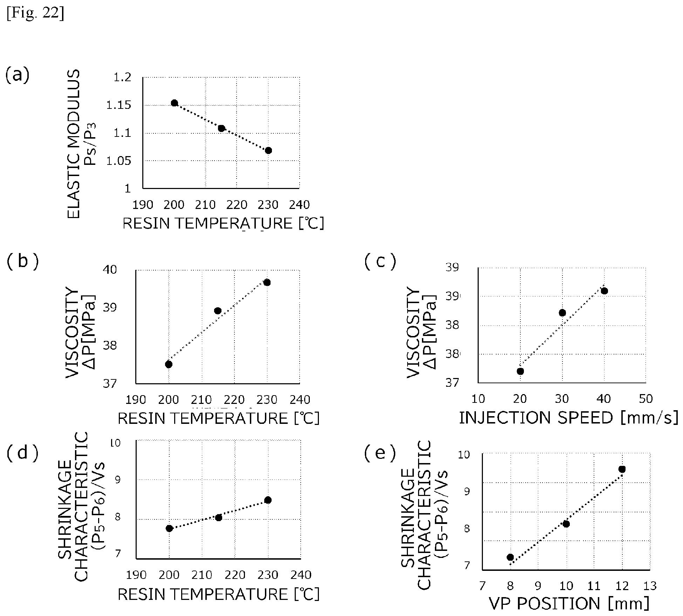

   Figs. 22(a) to 22(e) show the estimation results of material properties obtained in Test Example 5.

### [Description of Embodiments]

First, a brief explanation will be given of the molding conditions in injection molding and the material properties that affect the quality of molded products.

Molding conditions include heater temperature, screw movement speed, movement amount, pressure, and the like. The molding conditions have to be determined according to the type of resin material used, volume of the molded product, mold specifications, etc. Even if molding is performed under the same molding conditions, stable molded product quality cannot be obtained if the material properties of the resin material vary.

Material properties can vary even for the same type of resin material from the same manufacturer, and often fluctuate due to differences in manufacturing lots. Furthermore, in recent years, the use of recycled resin materials (recycled plastic materials), which are resin materials derived from recycled resin materials (waste plastics) has been increasing. Recycled resin materials are produced by flaking and pelletizing waste plastics. However, waste plastics contain plastics derived from various products, and recycled resin materials often exhibit greater variability in material properties compared to virgin materials. Injection-molded products manufactured using recycled resin materials, such as recycled pellets, are referred to as recycled plastics. The production and use of recycled plastics through material recycling is effective in reducing CO₂ emissions.

One of the material properties that affects the dimensions of molded products is resin viscosity. Since viscosity greatly affects the flowability of the resin, differences in viscosity will result in differences in the amount of resin filling even under the same molding conditions. In the case of high viscosity, flowability decreases and the amount of resin filling becomes smaller, while in the case of low viscosity, flowability improves and the amount of resin filling becomes larger. Therefore, changes occur in the dimensions of the molded product.

Furthermore, the elastic modulus (elastic constant) of the resin also exemplifies one of the material properties that affects the dimensions of the molded product. Since the elastic modulus is a physical quantity that shows the relationship between external force and strain (deformation), the elastic modulus greatly affects the holding pressure step controlled by the detected value of the pressure sensor. For example, materials with a high elastic modulus have a larger response stress associated with screw movement, so the screw movement amount relative to the set pressure value becomes smaller. Therefore, the mass of compensatory flow into the mold decreases, and the dimensions of the molded product tend to become smaller.

In addition, the shrinkage characteristic is also one of the material properties that affects the dimensions of the molded product. The shrinkage characteristic of a material is often expressed by a PVT characteristic, which shows the relationship between pressure [MPa], temperature [°C], and specific volume [cm³/g] during cooling. Therefore, materials with a large change in specific volume during the process from a high-temperature state where the resin material melts to a low-temperature state where the resin material cools and solidifies will have a large amount of shrinkage. In other words, even if the same volume of molten resin is filled into the mold, smaller molded product dimensions will be obtained with materials with a larger change in specific volume.

In a case where a plurality of material properties varies, control based on a single material property may not yield stable molded product quality. The present disclosure achieves more stable molded product quality than conventional methods by detecting a plurality of material properties during molding and controlling molding conditions according to changes in these multiple material properties. Through diligent research, the inventors have found that, in order to stabilize molded product dimensions, it is preferable to perform control considering at least two, and preferably all three, of viscosity, elastic modulus, and shrinkage characteristic. Furthermore, it was found that it is also preferable to control molding conditions considering thermal characteristics such as melt density, specific heat, and thermal conductivity of the material. The present disclosure also proposes accurately estimating the viscosity, elastic modulus, and shrinkage characteristic of the material for the above control. The resin materials applicable to the injection molding according to the present disclosure are typically thermoplastic resins, but may also be thermosetting resins, crystalline resins, or amorphous resins, and may be general-purpose plastics or engineering plastics. Examples of resin materials include polyolefins such as polyethylene (PE) and polypropylene (PP), polystyrene (PS), polyesters such as polyethylene terephthalate (PET) and polybutylene terephthalate (PBT), polyvinyl chloride (PVC), polyoxymethylene (POM), acrylonitrile butadiene styrene (ABS), polycarbonates (PC), polyphthalamide (PPA), and acrylic resins (PMMA). Resin materials suitable for material recycling include polyethylene terephthalate (PET), polyethylene (PE), polypropylene (PP), polystyrene (PS), and polyvinyl chloride (PVC). Furthermore, the resin material applicable to the injection molding according to the present disclosure may be a composite material in which fillers or elastomers are dispersed in a resin matrix, or may be a mixture of multiple resin materials.

### (Configuration)

The following describes the details of the control device and control method for an injection molding machine, and the method for estimating material properties according to the present disclosure. The control device for the injection molding machine according to the present disclosure acquires a plurality of parameters related to a plurality of material properties of the resin material used in injection molding, based on a plurality of process data measured during injection molding, and sets molding conditions using these parameters.

Fig. 1 is a configuration diagram of an injection molding system representing an example of an embodiment of the present disclosure. The injection molding system includes an injection molding machine 10, a control device 51, and a mold 1.

The injection molding machine 10 is composed of a plasticizing device 11 and a mold clamping device 12, and is controlled by the control device 51. The injection molding machine 10, together with the mold 1 attached to the injection molding machine 10, can be considered to constitute an apparatus for manufacturing injection molded products. The plasticizing device 11 can be considered to be the plasticizing section of the manufacturing apparatus. The control device 51 can be considered to be the device that controls the manufacturing apparatus.

The mold clamping device 12 is provided with a mold opening/closing servo motor 23 and an ejector motor 24. The mold opening/closing servo motor 23 is used not only to clamp the mold 1 installed in the mold clamping device 12 with a predetermined force, but also for the opening and closing operation of the mold. The ejector motor 24 is used when demolding the injection molded product from the mold.

The plasticizing device 11 is provided with a cylinder 13, a screw 14, a cylinder heating heater 31, a metering servo motor 21, an injection servo motor 22, and a load cell 15. Inside the cylinder 13, the molten resin is metered into the front of the cylinder as the screw 14 retracts. The retraction movement of the screw 14 is achieved by the melting of the material due to the action of the cylinder heating heater 31 and the rotational movement of the metering servo motor 21. The metered molten resin is then filled into the mold by the forward movement of the screw 14. The forward movement of the screw 14 is achieved by the rotational movement of the injection servo motor 22. The load cell 15 is provided at the rear end of the screw 14 and is used to control the pressure conditions during metering and filling.

Each servo motor can instantly detect analog data such as rotational speed, torque, speed, and position, and outputs these data as molding machine data 101 from a data output unit 16. Similarly, the analog data on pressure acquired by the load cell 15 are also included in the molding machine data 101. The output molding machine data 101 are input to the control device 51.

The molding machine data 101 may include numerical values other than analog data. Examples of such numerical data include the minimum cushion position, holding pressure completion position, filling peak pressure, VP switching position, etc., which are calculated as actual values for one cycle by a computer in the injection molding machine.

The mold 1 is equipped with one or more mold sensors 61. A sensor 61 may be configured of different types of sensors, such as a pressure sensor that detects the pressure state inside the mold and a resin temperature sensor that detects the temperature state of the molded product. In addition, a gap sensor that detects the mold opening amount, a thermocouple that detects the mold temperature, and a speed sensor that detects the flow velocity of the molten resin may be used. The detected data are output as mold data 201 and input to the control device 51.

A cylinder sensor 71 may be installed at the cylinder 13. Multiple sensors may be used, such as a resin temperature sensor, a pressure sensor, and a speed sensor. The detected data are output as cylinder data 301 and input to the control device 51.

In the present embodiment, the measurement results of a measuring machine may also be treated as data. For example, a molded product measuring machine 81 can be installed near the injection molding machine to enable online measurement of the molded product. Multiple measuring machines may be used, such as a weight measuring machine, a length measuring machine, and a density measuring machine. The measurement results are output as measurement data 401 and input to the control device 51.

The control device 51 may be implemented in any manner as long as it can communicate with the injection molding machine 10 and the molded product measuring machine 81. For example, the control device 51 may be implemented by a device different from the injection molding machine 10, or may be provided inside the injection molding machine 10. The control device 51 may also be a computer installed in the same facility as the injection molding machine 10, or a remote computer installed in a different facility and connected via a network. Remote computers include cloud computers or distributed computers.

The data input to the control device 51 require one or more of the molding machine data 101, mold data 201, cylinder data 301, and measurement data 401. The control device 51 performs arithmetic processing based on the input data and outputs molding condition correction conditions 901. The correction conditions 901 are input as command signals from a data input unit 17 provided in the injection molding machine, and the molding conditions for the next shot are rewritten.

Fig. 2 is a control block diagram representing an example of an embodiment of the present disclosure. The injection molding machine 10 molds a product in each cycle and outputs molding machine data 101 and cylinder data 301. The molded product is instantly measured online by the measuring machine 81, and the measuring machine 81 outputs measurement data 401. From the mold 1, mold data 201 are output in each cycle from sensors installed inside the mold. One or more of the molding machine data 101, mold data 201, cylinder data 301, and measurement data 401 are input to the control device 51.

The data input to the control device 51 are aggregated in a data detection unit 52. The data detection unit 52 performs processing to convert continuous numerical information, such as analog data, into single numerical data. For example, the data detection unit 52 converts the input data into integral values, rates of change, maximum values, or minimum values within freely selected ranges. The data detection unit 52 also calculates other numerical values from multiple pieces of numerical information. For example, the data detection unit 52 can calculate the injection volume by performing calculations that take into account the cross-sectional area of the cylinder inner diameter from the screw position information included in the molding machine data 101. The converted numerical group is input from the data detection unit 52 to a material property calculation unit 53 as feature quantities 501.

The feature quantities 501 are sent to the material property calculation unit 53 and used to estimate (acquire) the material properties 511 of the resin material being used. The estimation calculation process uses calculation equations based on tests, prediction models based on machine learning, and the like. The material properties 511 are, for example, at least one of resin viscosity, elastic modulus, PVT characteristic, shrinkage rate, density, specific heat, and thermal conductivity. The material property calculation unit 53 estimates two or more of these material properties.

The material properties 511 estimated by the material property calculation unit 53 may be estimated as values in any format, as long as they correspond to the actual material properties or have a one-to-one correspondence with the actual material properties. The estimated values obtained by the material property calculation unit 53 may deviate from the numerical values extracted according to ISO, and furthermore, the unit system of the estimated values may differ from the unit system of the original material properties. In the present disclosure, the estimated values obtained by the material property calculation unit 53 are handled as parameters related to the material properties. The estimated values obtained by the material property calculation unit 53 can be considered as parameters correlated with the material properties. Parameters related to or correlated with the material properties can be, for example, one-to-one associated with the material properties through a predetermined calculation.

The estimated material properties 511 are compared with the reference material properties in a comparison unit 54. The reference material properties are values when the molded product quality is guaranteed, and correspond to the target values for so-called good-quality molding. These reference material properties are derived by performing test runs in advance and using the same method as the calculation performed by the material property calculation unit 53 described above. The comparison of material properties is performed for each type of property, and a difference 521 from the reference is calculated for each. Since there are two or more material properties to be detected, the difference 521 from the reference also consists of the same number of values. The reference material properties are expressed as parameters in the same format as the estimated values so as to enable comparison with the estimated values.

The numerical values of the difference 521 from the reference are sent to the control amount calculation unit 55, which extracts molding correction conditions 901 that suppress the impact on molding quality. The calculation process for the correction conditions uses calculation equations based on tests, prediction models based on machine learning, and the like. As mentioned above, since a plurality of material properties is to be compared, the correction conditions 901 often consist of a plurality of molding machine control parameters.

The correction conditions 901 output from the control device 51 are input to the injection molding machine 10. The molding conditions of the injection molding machine 10 are set according to the correction conditions 901 and reflected in the molding of subsequent shots.

For the molding after correction, various data are collected and sent to the data detection unit 52 in the same way as described above. Thereafter, the same processing is repeated recursively.

Fig. 3 is a flowchart diagram that supplements the explanation of the control method of the injection molding machine 10 performed by the control device 51 described hereinabove.

First, a manufacturing apparatus including the injection molding machine 10 and the mold 1 attached to the injection molding machine 10 is prepared, and injection molding is executed by the injection molding machine 10 in the injection molding step ST1. The injection molding operation currently being focused on is referred to as the first injection molding operation. The injection molding operation after the first injection molding operation (it may be after multiple cycles, not just immediately after) in the loop process shown in the flowchart of Fig. 3 is referred to as the second injection molding operation.

In the collection step ST2, data associated with the injection molding operation (one or more of data 101, 201, 301, and 401 in Figs. 1 and 2) are collected. Specifically, the control device 51 collects a plurality of process data measured during the first injection molding from a plurality of sensors provided at the injection molding machine 10 or the mold 1.

In step ST3, the feature quantities 501 are derived from the data content. In steps ST4 and ST5, two or more material properties (material properties 511 in Fig. 2) are estimated from the feature quantities 501. In Fig. 3, two material properties, material property a and material property b, are estimated. Steps ST3 to ST5 correspond to an acquisition step for acquiring a plurality of material properties of the resin material used in injection molding, or a plurality of parameters related to a plurality of material properties, based on the collected process data.

In steps ST6 and ST7, a comparison is made between material property a and a reference material property A, and between material property b and a reference material property B, and the differences from the references (difference 521 from the reference in Fig. 2) are calculated. In the next steps ST8 and ST9, it is determined whether the calculated differences from the references A and B are within the allowable range. If the differences are within the allowable ranges, the process proceeds to step ST13. If the differences are outside the allowable ranges, the process proceeds to steps ST10 and ST11, and the molding machine correction conditions α and β (correction conditions 901 in Figs. 1 and 2) are derived. In step ST12, the correction conditions α and β are reflected in the molding conditions, and the process proceeds to step ST13. Steps ST6 to ST12 correspond to a control step for setting the molding conditions for the second injection molding that follows the first injection molding based on the plurality of parameters acquired in the acquisition step.

In step ST13, it is determined whether the production quantity is necessary and sufficient. If it is sufficient, the flow ends, but if it is insufficient, the process returns to step ST1 and molding is executed again.

Fig. 3 illustrates the acquisition of process data, estimation of material properties, and correction of molding conditions as they are performed in each cycle, but the present disclosure is not limited to this. For example, process data may be acquired over a plurality of cycles, and material properties may be estimated based on the acquired process data. As an example, material properties may be estimated from statistical information of process data over a plurality of cycles. In the present disclosure, one or a plurality of cycles of collecting process data for estimating material properties are referred to as an injection molding operation. The molding conditions corrected based on the process data collected in the first injection molding operation are applied to the second injection molding operation that follows the first injection molding operation. The second injection molding operation does not need to be immediately after the first injection molding operation; it can be an injection molding operation performed at any timing that is temporally later than the first injection molding operation.

### <Example 1>

A comparison is made between the quality of molded products molded using the control device according to the present disclosure and the quality of molded products molded using a conventional injection molding method. Example 1 represents a case where injection molding was performed using the control device and control method such as shown in Figs. 1 to 3. As described above, in the present disclosure, a plurality of material properties of a resin material is estimated using a plurality of sensors provided in an injection molding machine and a mold, and the molding conditions are controlled based on the trend thereof. In Example 1, viscosity and elastic modulus were estimated to perform molding condition control. In other words, in Example 1, material property a shown in Fig. 3 is viscosity, and material property b is elastic modulus.

For comparison with Example 1, Comparative Example 1 and Comparative Example 2, in which injection molding is performed using conventional technique, will be described.

Fig. 4 is a flowchart showing the control method of Comparative Example 1. Comparative Example 1 is an example of injection molding performed without estimating material properties or controlling molding conditions. In Comparative Example 1, only the execution of injection molding in step S61 and the determination of whether the required number of products has been reached in step ST69 are performed.

Fig. 5 is a flowchart showing the control method of Comparative Example 2. In Comparative Example 2, estimation of material properties is performed for only one material property. The process from the execution of injection molding in step ST51 to the derivation of feature quantities in step ST53 is generally the same as in Example 1, but the estimation of material properties in step ST54 is performed for only one material property. Therefore, the process from steps ST55 to ST57 is not branched. Thus, Comparative Example 2 is characterized by performing estimation and controlling molding conditions for only one specific material property. This Comparative Example 2 is an example where only viscosity was estimated to control molding conditions.

Fig. 6(a) is a diagram showing Test Configuration 1 for comparing the effects of Example 1 and Comparative Example 1 and Comparative Example 2. In Test Configuration 1, two molding materials with different viscosities and elastic moduli were introduced into a hopper 18 that can store approximately 100 shots of material. In the present test, a HIPS (high-impact polystyrene) material was used, and materials A, which is denoted by reference numeral 91, and B, which is denoted by reference numeral 92, with significantly different viscosities and elastic moduli were prepared. Viscosity was compared using the measurement results of MVR (Melt Volume Rate: ISO 1133, 200°C/5 kg), and elastic modulus was compared using values measured near the glass transition temperature (110°C) using a rotational rheometer. Material A has a lower MVR and higher viscosity and higher elastic modulus than material B. Incidentally, the specific gravity of the two materials is the same. Fig. 6(b) shows the viscosity and elastic modulus of material A and material B.

In Test Configuration 1, first, 50 shots of material A were loaded into the hopper, followed by 50 shots of material B. Where injection molding is performed in this state, only material A is plasticized and molded in the initial stage, but as material A is consumed, the inside of the hopper 18 is replaced with material B. At this time, since the two materials mix slowly, a boundary 93 between the two materials in the hopper becomes unclear.

Under these conditions, molding was repeated until the materials in the hopper were exhausted, and the results of measuring the molded product weight for each shot are shown in Fig. 7. In Comparative Example 1 and Comparative Example 2, which represent conventional techniques, a change in weight is observed from approximately the 40th shot to the 60th shot. However, Comparative Example 2 tended to have a smaller weight change than Comparative Example 1. On the other hand, in Example 1, no change in weight was observed until the 100th shot at which molding was completed.

The weight changes in Comparative Example 1 and Comparative Example 2 are considered to be due to changes in molding behavior accompanying the replacement of materials. Until the 40th shot, injection molding mainly using material A was performed, but between the 40th and 60th shots, the two materials were slowly mixed, so it is considered that the material properties of the two materials had an effect. After the 60th shot, the inside of the hopper was completely replaced with material B, so it is considered that the material properties of material B had an effect.

The results of analyzing the details of the molded product weight are shown in Figs. 8(a) and 8(b). Fig. 8(a) shows the weight filled during the injection step, and Fig. 8(b) shows the weight filled during the holding pressure step. A holding pressure step filling amount Wₚ [g] is derived by equation (1) using a cylinder inner diameter cross-sectional area A [cm²], a screw stroke Sₚ [mm] during holding pressure, and a specific gravity ρ [g/cm³] of the resin material.
Holding pressure step filling amount: ${W}_{p} = ρ {AS}_{p} / 10$

On the other hand, an injection step filling amount Wᵢ [g] is calculated by equation (2) using the molded product weight W_{A} [g].
Injection step filling amount: ${W}_{i} = {W}_{A} - {W}_{P}$

In the results presented in Figs. 8(a) and 8(b), Comparative Example 1 shows variations in both the holding pressure step filling amount and the injection step filling amount. Comparative Example 2 shows variations only in the holding pressure step filling amount. On the other hand, in Example 1, there are no variations in either the holding pressure step filling amount or the injection step filling amount.

In a typical injection molding machine, the injection step is operation-controlled by the movement speed and position of the screw of the injection molding machine. Therefore, even if different materials are used, the screw movement during the injection step will always be the same, provided the molding conditions are the same. However, where the viscosity of the material is different, even with the same screw operation, there will be a change in the weight of the resin flowing into the mold. This is because different viscosities result in different pressure distributions upstream and downstream of the resin flow path, leading to differences in the overall density distribution. Higher viscosity materials have lower pressure downstream and lower density. Therefore, high-viscosity materials have a smaller filling weight compared to low-viscosity materials.

Furthermore, in a typical injection molding machine, during the holding pressure step, the screw operation is controlled based on the pressure value detected in the plasticizing device. Pressure is often detected by the load cell 15 installed at the rear end of the screw, as shown in Fig. 1. Therefore, the screw operation during the holding pressure step is susceptible to the influence of the elastic modulus. For example, materials with a high elastic modulus experience larger response stress accompanying screw movement, resulting in a smaller amount of screw movement relative to the set pressure value. Consequently, the weight of material filled into the mold also decreases.

As described above, the viscosity of the resin material has a significant impact on the filling step, and the elastic modulus has a significant impact on the holding pressure step. In Comparative Example 1 of the conventional technique, since material properties were not estimated and molding conditions were not controlled, changes in the viscosity and elastic modulus of the material in a hopper resulted in fluctuations in both the injection step filling amount and the holding pressure step filling amount. Furthermore, in Comparative Example 2 of the conventional technique, only molding condition control targeting viscosity was performed, so while the injection step filling amount was maintained stable, fluctuations during the holding pressure step filling amount could not be suppressed. In contrast, in Example 1, estimation and molding condition control are performed for both viscosity and elastic modulus, thus achieving stabilization of both the injection step filling amount and the holding pressure step filling amount.

In Example 1, molding condition control is performed based on two material properties: viscosity and elastic modulus. An example of molding condition correction will be explained using Figs. 9 and 10.

Fig. 9 shows an example of measuring the elastic modulus of a resin material using a rotational rheometer. Fig. 9 shows the value of the elastic modulus [Pa] when the temperature [°C] is varied while keeping the rotational frequency at 1 [Hz] and the strain at 0.5 [%] constant. As can be seen from this measurement result, the elastic modulus is temperature-dependent. Therefore, in order to match the elastic modulus of two different materials, it is necessary to adjust the temperature conditions. For example, in the case of Fig. 9, to match the elastic modulus of material B at 110°C, the temperature state of material A needs to be set to 118°C. Similarly, in an injection molding machine, it is possible to stabilize the elastic modulus by adjusting the heater temperature conditions (resin temperature) of the cylinder.

Fig. 10 shows an example of measuring the viscosity of a resin material using a capillary rheometer. Fig. 10 shows the viscosity [Pa·s] values when the melting temperature [°C] and shear rate [1/s] are varied. As can be seen from these measurement results, viscosity is dependent on both temperature and shear rate. Therefore, to match the viscosity of two different materials, it is necessary to adjust the temperature conditions or shear rate conditions. The trend in Fig. 10 indicates that when the viscosity is wished to be lowered, the temperature needs to be raised or the shear rate needs to be increased. In other words, it is considered that viscosity can be stabilized in an injection molding machine by adjusting the resin temperature or injection speed.

As described above, in the injection molding machine, the elastic modulus can be adjusted by the resin temperature, and the viscosity can be adjusted by the resin temperature and injection speed. Therefore, the adjustment of the elastic modulus and viscosity can be expressed by the following mathematical equations (3) and (4), which have the setting parameters of the injection molding machine as variables.
Elastic modulus: $Δg = At$
Viscosity: $Δμ = Bt + Cd$

Here, t is a variable corresponding to the resin temperature [°C], d is a variable corresponding to the injection speed [mm/sec], and A, B, and C are all constants. The constants A to C can be derived in advance for each material through material analysis etc. Δg and Δµ represent the deviation quantity between the target value and the actual value of the material properties. The target value is set from the actual values of good products. Then, by solving these equations, the variables t and d are extracted. The extracted t and d become the correction amounts and are reflected in the molding conditions of the next shot.

Thus, in Example 1, the molding conditions for the second injection molding are set using relational equations (3) and (4) that represent the relationship between the adjustment amount of the molding conditions and the change in a parameter, which are obtained in advance for each of a plurality of material property-related parameters. In Example 1, a method of controlling two objective variables, elastic modulus and viscosity, with two explanatory variables, resin temperature and injection speed, is used. However, as long as the number of explanatory variables is not greater than the number of objective variables, it is possible to derive a solution even if there are three or more objective variables. It is preferable that the explanatory variables include at least two material properties among viscosity, elastic modulus, and shrinkage characteristic.

For example, there may be three objective variables: elastic modulus, viscosity, and shrinkage characteristic. Fig. 11 is a diagram showing the shrinkage characteristic of the material. Shrinkage characteristic is generally measured using a PVT measuring instrument and is expressed as the relationship between specific volume [cm³/g] under pressure [MPa] and temperature [°C] conditions. As is clear from this figure, the shrinkage characteristic of the material can be adjusted by the resin temperature and pressure. Therefore, the adjustment of shrinkage characteristic can be expressed as in equation (5).
Shrinkage characteristic: $Δρ = Ft + Gp$

Here, t is a variable corresponding to the resin temperature [°C], p is a variable corresponding to the pressure [MPa], and F and G are constants. The constants F and G can be calculated in advance for each material through material analysis etc. Δρ represents the deviation quantity between the target value and the actual value of the material property (shrinkage characteristic).

If three objective variables, elastic modulus, viscosity, and shrinkage characteristic, are considered, the explanatory variables included in equations (3) to (5) are t, d, and p. Therefore, by solving a system of equations in several variables, it is possible to adjust to the desired molding conditions.

However, there is a problem that the calculation accuracy decreases as the number of material properties serving as objective variables increases. As a result of extensive research, it has been found that at least two material properties need to be adjusted, but it has also become clear that it is sufficient for injection molding if any two of the three material properties, viscosity, elastic modulus, and shrinkage characteristic, are included. That is, by performing control using at least viscosity and elastic modulus, elastic modulus and shrinkage characteristic, or shrinkage characteristic and viscosity as objective variables, sufficiently stable molded product quality can be obtained. As mentioned above, viscosity affects the resin filling amount during the injection step, and the elastic modulus affects the resin filling amount during the holding pressure step. Furthermore, the shrinkage characteristic affects the shrinkage amount of the molded product in the cooling step.

Thus, by controlling the three material properties, viscosity, elastic modulus, and shrinkage characteristic, to be the same, variations in material properties that significantly affect the entire injection molding process can be suppressed, thereby making it possible to stabilize quality.

In the present Example, since the changed molding conditions can be fed back to the injection molding machine in a period of one shortest cycle, even if the material properties of the resin material change during mass production, the occurrence of defective products can be minimized. Furthermore, in the present Example, since a plurality of material properties can be simultaneously estimated by calculating the collected process data, variations in molded product dimensions caused by a plurality of factors can be effectively suppressed. In addition, the material properties to be estimated include at least viscosity, elastic modulus, and shrinkage characteristic. In the present Example, since the calculation process is limited to the resin filling amount during the injection step, the mass of compensatory flow during the holding pressure step, and the shrinkage amount of the molded product in the cooling step, the calculation efficiency can be optimized.

### <Example 2>

A method for estimating the viscosity of the resin material from the process data obtained during one molding cycle will be described hereinbelow. In the present Example, the viscosity is estimated based on the relationship between the upstream pressure P₁ obtained from the first pressure sensor provided in the plasticizing section of the injection molding machine 10 and the downstream pressure P₂ obtained from the second pressure sensor provided in the resin flow path inside the mold. More specifically, in the present Example, the viscosity is estimated based on the relationship between P₁ and P₂ when the temperature sensor value obtained from the temperature sensor that is provided near the second pressure sensor and detects the temperature of the resin material is at least the glass transition temperature Tg.

The viscosity is determined by equations (6) and (7) according to Hagen-Poiseuille's law.
Viscosity: $μ \left[Pa⋅s\right] = \left({πa}^{4}ΔP\right) / \left(SQL\right)$ $ΔP = {P}_{1} - {P}_{2}$

Here, Q is the flow rate of the molten resin [m³/s], L is the flow path length [m], a is the flow path radius [m], P₁ is the upstream pressure [Pa], and P₂ is the downstream pressure [Pa].

In injection molding, the flow path length L and flow path radius a are fixed values determined by the specifications of the mold and injection molding machine. The flow rate Q is also fixed by the molding conditions (injection speed etc.). In other words, by measuring the difference (ΔP) between the upstream pressure P₁ and the downstream pressure P₂, fluctuations in the viscosity of the resin being used can be ascertained. That is, ΔP is a value proportional to viscosity in the injection molding step under consideration, and is a parameter related to viscosity. Therefore, in the present Example, by controlling the molding conditions based on ΔP, control of molding conditions based on viscosity can be achieved. However, it is assumed that ΔP is measured when the molten resin is flowing. Therefore, in injection molding, measurements need to be performed in a molten state of the resin and during the injection step and holding pressure step.

The installation positions of the first pressure sensor for measuring the upstream pressure P₁ and the second pressure sensor for measuring the downstream pressure P₂ can be any locations on the resin flow path, as long as the first pressure sensor is located upstream of the second pressure sensor. For example, the first pressure sensor may be installed in the cylinder or nozzle of the plasticizing device, or a member that extends the flow path may be inserted between the mold and the nozzle, and the pressure may be measured inside that member. Alternatively, the detection value of the load cell already provided at the rear end of the plasticizing device screw may be used as the first pressure sensor. Meanwhile, the second pressure sensor can be installed at any location in the mold, such as a sprue bush, hot runner manifold, hot runner tip, runner, or cavity.

Fig. 12(a) shows the sensor arrangement in Test Configuration 2. In Test Configuration 2, the first pressure sensor 72 is installed in the nozzle section of the plasticizing device 11, and the second pressure sensor 62 is installed near the gate in the mold to measure the viscosity-related parameter ΔP. At this time, a resin temperature sensor 63 is installed near the second pressure sensor, and the resin temperature is also measured. Fig. 12(b) shows the measurement waveform for one cycle measured in this way.

When ΔP(x) at an arbitrary timing x is expressed by the following equation (8), $ΔP \left(x\right) = {P}_{1} \left(x\right) - {P}_{2} \left(x\right)$ the viscosity-related parameter ΔP is expressed by equation (9).
[Math. 1] $Δ P = \frac{1}{{T}_{e} - {T}_{s}} {\int }_{{T}_{s}}^{{T}_{e}} Δ P \left(t\right) dt$

Here, T_{S} is the measurement start time, and T_{E} is the measurement end time. That is, ΔP is the average pressure difference from the measurement start time to the measurement end time.

Since the viscosity-related parameter ΔP needs to be measured in a molten state of the resin and during the injection step and the holding pressure step, it is calculated as the average pressure difference over an arbitrary time slot from the start of injection until the resin temperature reaches the glass transition temperature Tg (between 0.0 s and 4.5 s in Fig. 12(b)). The measurement time slot can be set arbitrarily within the above time slot, for example, during the injection step (0.0 s to 1.5 s in Fig. 12(b)), during the holding pressure step (1.5 s to 4.5 s), or during the entire range (0.0 s to 4.5 s).

However, when determining the measurement time slot, it is preferable to consider the time dependence and shear rate dependence of viscosity. Fig. 13 is a schematic diagram of the time dependence of viscosity. When a shear rate is applied to a molten resin, the viscosity takes a certain amount of time to reach an equilibrium state. It has also been shown that the time to reach the equilibrium state varies depending on the shear rate condition. As described above, in injection molding involving high-rate shearing, it is necessary to determine the measurement time slot after identifying the timing at which the equilibrium state is reached.

For example, during the injection step (0.0 s to 1.5 s) in Fig. 12(b), P₁ and P₂ continue to increase over time and have not reached an equilibrium state. On the other hand, during the holding pressure step (1.5 s to 4.5 s), the pressure value is stabilized and a state close to equilibrium is reached. However, in the latter half of the holding pressure step, the pressure value of P₂ begins to decrease. Therefore, it is considered preferable to measure ΔP within the time slot of the first half of the holding pressure step.

As a result of extensive research, it was found that a state where the pressure fluctuation is within 5 MPa/sec can be considered as relative equilibrium, and the error in viscosity measurement in this state is small. Therefore, during the injection step and holding pressure step, the viscosity is estimated based on the values when the rate of change over time of both the first pressure sensor value P₁ and the second pressure sensor value P₂ during the injection step and holding pressure step is within 5 MPa/sec. More specifically, it is considered preferable to start measurement after the start of the holding pressure step and when the pressure fluctuation is within 5 MPa/sec, and to end the measurement when the pressure fluctuation is at least 5 MPa/sec or when the holding pressure step ends, and then determine the average pressure.

Fig. 14 shows the measurement results of the correlation between differential pressure (viscosity parameter) ΔP and MVR (Melt Volume Rate: ISO 1133, 200°C/5 kg) when injection molding was performed using various types of HIPS materials under Test Configuration 2. A strong correlation between ΔP and the viscosity (MVR) of the resin material can be confirmed.

The method of the present Example can be applied to the estimation of the viscosity of the resin material in Example 1, and the molding conditions can be changed based on the obtained estimated viscosity value.

In the above example, the viscosity is estimated based on the difference P₁ - P₂ between the upstream pressure P₁ and the downstream pressure P₂, but the difference ΔP may be P₂ - P₁ or |P₁ - P₂|. Furthermore, where the viscosity is estimated based on a relationship corresponding to the deviation or difference between P₁ and P₂, relationships other than P₁ - P₂ may be used. For example, αP₁ - βP₂ (where α and β are predetermined coefficients greater than 0) or P₁/P₂ represent the deviation between P₁ and P₂, and the viscosity may be estimated based on such values. In addition to these, the viscosity may be estimated using values that include components of P₁ - P₂ or P₁/P₂ through equation transformation.

### <Example 3>

A method for estimating the elastic modulus of a resin material from process data obtained during one molding cycle will be described hereinbelow. In the present Example, the elastic modulus is estimated based on the relationship between the pressure sensor value obtained from the pressure sensor provided in the resin flow path inside the mold 1 and the screw pressurization force value of the injection molding machine 10. More specifically, the elastic modulus is estimated based on the relationship between the pressure P₃ in the resin path in the mold when the temperature of the resin material drops to not more than Tg + 10°C in the holding pressure step during injection molding, and the screw pressurization force value Ps of the plasticizing device of the injection molding machine 10.

In the present disclosure, the term "elastic modulus" is used as a general term for elastic constants, elastic coefficients, Young's modulus (longitudinal elastic modulus, bending elastic modulus), rigidity modulus (transverse elastic modulus, torsional elastic modulus, shear elastic modulus), Poisson's ratio, and bulk elastic modulus. The elastic modulus of the resin material used in injection molding is evaluated by performing dynamic viscoelasticity measurement using a rotational rheometer etc., and the storage modulus is evaluated as the elastic term of the material. The elastic modulus is measured as the value of a response stress to strain (deflection), and the unit is [Pa] or [Bar].

As mentioned above, the elastic modulus of the material greatly affects the holding pressure step. In particular, it has been clarified that the elastic modulus near the glass transition temperature (Tg) of the material has a strong influence. Fig. 15 is a graph showing the relationship between the elastic modulus of the HIPS material at Tg (= 110°C) and the injection capacity of the injection molding machine. The elastic modulus at Tg can be derived by extracting the measurement results shown in Fig. 9 (Example 1) using a rotational rheometer. From Fig. 15, it can be seen that there is a strong correlation between the elastic modulus at Tg and the injection capacity.

The injection capacity Vi in Fig. 15 is calculated by equation (10).
Injection capacity: $Vi = \left(Lm-Lc\right) π {\left(D/2\right)}^{2}$

Lm is the metering position [mm], Lc is the holding pressure completion position [mm], and D is the screw inner diameter [mm]. Since the metering position Lm and the screw inner diameter D are fixed regardless of the material state, the change in injection capacity Vi is caused by the change in the holding pressure completion position Lc.

Since a change in injection capacity means a change in a molded product mass, this suggests that the elastic modulus at Tg affects the dimensions of the molded product.

Test Example 3, which illustrates an example of estimating the elastic modulus at Tg, will be described hereinbelow. In Test Example 3, the pressure sensor 62 provided in the resin flow path inside the mold 1 shown in Fig. 12(a) and the temperature sensor 63 that is provided near the pressure sensor and detects the temperature of the resin material are used.

As a result of extensive research, it became clear that there is a correlation between the elastic modulus at Tg of the resin material and the decrease trend of the pressure inside the mold. In particular, there was a negative correlation between the mold internal pressure P₃ when the molded product temperature inside the mold was lowered to Tg + 10°C and the elastic modulus at Tg, and a stronger negative correlation between the mold internal pressure P₃ when the molded product temperature was lowered to Tg and the elastic modulus at Tg.

The elastic modulus at Tg in the present Example is estimated based on equation (11). That is, the ratio Ps/P₃ of the screw pressurization force Ps of the injection molding machine to the pressure sensor value P₃ is a parameter related to the elastic modulus. Therefore, in the present Example, by controlling the molding conditions based on Ps/P₃, control of the molding conditions based on the elastic modulus at Tg is achieved. $Elastic modulus \left(at Tg\right) ∝ Ps \left(x\right) / {P}_{3} \left(x\right)$ x: the point in time when the molded product temperature reaches Tg.

As mentioned above, since there is a negative correlation between the mold internal pressure P₃ when the molded product temperature inside the mold is lowered to Tg + 10°C and the elastic modulus at Tg, the point in time when the molded product temperature drops to a temperature of not more than Tg + 10°C may be used as x. Furthermore, any temperature may be used, provided that it is not more than Tg + 10°C, for example, the point at which the temperature cools to Tg may be used as x.

In the example shown in Fig. 12(b), the molded product temperature reaches Tg at x = 4.5 s, so the pressure value P₃(4.5) at this time is approximately 28 MPa. Furthermore, since the screw pressurization force at that time is Ps(4.5) = 40 MPa, the elasticity-related parameter Ps/P₃ is 1.54 MPa.

Fig. 16 shows the measurement results of the correlation between the elasticity-related parameter Ps/P₃ and the elastic modulus at Tg for each material when injection molding was performed using various types of HIPS materials under the conditions of Test Example 3. A strong correlation between the ratio Ps/P₃ and the elastic modulus at Tg can be confirmed.

The method of the present Example can be applied to the estimation of the elastic modulus of the resin material in Example 1, and the molding conditions can be changed based on the obtained estimated value.

In the above example, the elastic modulus is estimated based on the ratio of the screw pressurization force Ps to the pressure value P₃, but where the elastic modulus is estimated based on the relationship or ratio between P₃ and Ps, relationships other than Ps/P₃ may also be used. For example, αPs/P₃, (Ps + β)/P₃, Ps/(P₃ + γ), or reciprocals thereof may be used to estimate the elastic modulus. Here, α, β, and γ are predetermined coefficients. In addition to these, the viscosity may be estimated using values that include components of Pₛ/P₃ or P₃/Ps through equation transformation.

### <Example 4>

Another method for estimating the elastic modulus of a resin material from process data obtained during one molding cycle will be described hereinbelow. While Example 3 described a method for estimating the elastic modulus at the glass transition temperature (Tg), Example 4 describes a method for estimating the elastic modulus during melting. In the present Example, the elastic modulus is estimated based on the relationship between the pressure sensor values obtained from a pressure sensor installed in the resin flow path inside the mold 1 and the screw position in the injection molding machine 10. More specifically, the elastic modulus is estimated based on the relationship between the change ΔLs in screw position and the change ΔP₄ in pressure in the resin path inside the mold during the injection step during injection molding.

The elastic modulus when the resin material is completely melted follows Hooke's law. Hooke's law expresses the amount of deflection relative to the load with a spring constant, and the equation is as follows (12). $F = Kx$

Here, x is the deflection of the spring, F is the reaction force (load) by the spring, and K is the spring constant.

In injection molding, it can be considered that x corresponds to the amount of screw movement during injection, F corresponds to the generated stress (mold internal pressure), and K corresponds to the elastic modulus during melting. Fig. 17 is a diagram plotting the screw position in Test Example 3 illustrated by Fig. 12. The screw movement amount ΔLs during the injection step can be obtained by equation (13). $ΔLs = {L}_{m} - {L}_{vp}$

Here, Lm is the metering position [mm], and Lvp is the VP switching position [mm]. The fluctuation amount of the mold internal pressure in the same time slot (during the injection step) is denoted by ΔP₄.

In the present Example, the elastic modulus during melting is estimated based on equation (14). That is, the ratio ΔP₄/ΔLs of ΔP₄ to ΔLs is used as a parameter related to the elastic modulus (during melting). Therefore, in the present Example, by controlling the molding conditions based on ΔP₄/ΔLs, control of the molding conditions based on the elastic modulus during melting is achieved. $Elastic modulus \left(during melting\right) ∝ {ΔP}_{4} / ΔLs$

Fig. 18 shows the measurement results of the correlation between the elastic modulus-related parameter ΔP₄/ΔLs and the elastic modulus during melting of each material when injection molding of various types of HIPS materials was performed under the conditions of Test Example 3. A strong correlation between ΔP₄/ΔLs and the melt elastic modulus can be confirmed.

The method of the present Example can be applied to the estimation of the elastic modulus of the resin material in Example 1, and the molding conditions can be changed based on the obtained estimated value.

In the above example, the elastic modulus is estimated based on the change in mold internal pressure ΔP₄ with respect to the screw movement amount ΔLs, but where the elastic modulus is estimated based on the relationship or ratio between ΔLs and ΔP₄, relationships other than ΔP₄/ΔLs may be used. For example, the elastic modulus may be estimated using αΔP₄/ΔLs, (ΔP₄ + β)/ΔLs, ΔP₄/(ΔLs + γ), or reciprocals thereof. Here, α, β, and γ are predetermined coefficients. In addition to these, the viscosity may be estimated using values that include components of ΔP₄/ΔLs or ΔLs/ΔP₄ through equation transformation.

### <Example 5>

A method for estimating the shrinkage characteristic of a resin material from process data obtained during one molding cycle will be described hereinbelow. In the present Example, the shrinkage characteristic is estimated based on the relationship between the pressure sensor value obtained from a pressure sensor provided in the resin flow path inside the mold 1 and the injection volume. More specifically, the shrinkage characteristic is estimated based on the relationship between the mold internal pressure P₅ when the mold gate is sealed during the holding pressure step and cooling step during injection molding, the mold internal pressure P₆ when the molded product reaches a temperature equal to or below the load deflection temperature, and the injection volume Vi.

Resin shrinkage in injection molding is mainly related to two factors: "thermal linear expansion" and "state change". Thermal linear expansion is a characteristic in which the volume changes with changes in the resin temperature, and state change is the volume change that occurs when the resin changes between the molten and solidified states.

Such shrinkage characteristic of the material is often represented by a diagram called a PVT curve, as shown in Fig. 11, which shows the relationship between pressure [MPa], temperature [°C], and specific volume [cm³/g] during cooling. This characteristic is mainly determined using a dedicated measuring device called a PVT measuring device. Generally, in injection molding, the resin material changes from a high-temperature, high-pressure state to a low-temperature, low-pressure state, so the shrinkage behavior in the mold can be estimated by reading the difference in specific volume at that time.

Specific volume is the volume per unit weight. However, in injection molding, there is a time slot during which the weight changes due to the inflow of resin into the mold. Therefore, to estimate the change in specific volume from the process data, it is necessary to analyze the data after the resin inflow into the mold has stopped.

Test Example 4 illustrating an example of shrinkage characteristic estimation will be described hereinbelow. In Test Example 4, the pressure sensor 62 provided in the resin flow path inside the mold 1 shown in Fig. 12(a) and the temperature sensor 63 that is provided near the pressure sensor and detects the temperature of the resin material are used. Since the mold runner is a cold runner, the time at which the gate solidifies (gate seal time) was determined beforehand. In Test Example 4, the gate seal time was 5.0 sec after the start of injection. This means that after 5.0 sec, there is no resin inflow into the mold, and the resin weight does not change. Therefore, the process data measured during this period are not affected by fluctuations in resin weight.

Fig. 19 summarizes the relationship between resin temperature and pressure after 5.0 sec in Test Example 4. The vertical axis represents pressure [MPa], and the horizontal axis represents resin temperature [°C]. The plotted data are generally linear. This is similar to the linear slope of the PVT characteristics shown in Fig. 11. That is, it is considered that the pressure fluctuation when the weight is constant represents the change in the molded product volume (specific volume).

In the present Example, the shrinkage characteristic (specific volume difference)is estimated based on equation (15). That is, a value (P₅ - P₆)/Vi obtained by dividing the pressure difference between the pressure sensor value P₅ at the time of gate sealing and the pressure sensor value P₆ when the molded product is equal to or below the weighted deflection temperature by the injection volume Vi is used as a parameter related to the shrinkage characteristic (specific volume difference). The injection volume Vi is obtained by equation (10). The reason for dividing by the injection volume Vi is to account for fluctuations in the filling weight for each molding due to changes in viscosity and elastic modulus. In this way, in the present Example, by controlling the molding conditions based on (P₅ - P₆)/Vi, control of molding conditions based on shrinkage characteristic (specific volume difference) is achieved.$Shrinkage characteristic \left(specific volume difference\right) ∝ \left(P5 - P6\right) / Vi$ ...

Fig. 20 shows the measurement results of the correlation between the shrinkage characteristic-related parameter (P₅ - P₆)/Vi and the specific volume difference of each material when injection molding was performed using various types of HIPS materials under the conditions of Test Example 4. The specific volume difference was calculated from the difference between the specific volume at a temperature of 110°C (glass transition temperature) and a pressure of 20 MPa, and the specific volume at a temperature of 50°C and a pressure of 20 MPa, obtained by PVT measurement. This result confirms that (P₅ - P₆)/Vi has a strong correlation with the specific volume difference, i.e., the shrinkage characteristic.

As a modification of the present Example, the shrinkage characteristic (specific volume difference) may be estimated based on equation (16). That is, when P₅ is the pressure value at the time of gate sealing and P₆ is the pressure sensor value when the molded product is equal to or below the weighted deflection temperature, the value (P₅ - P₆)/W_{A}, obtained by dividing the pressure difference by the molded product weight W_{A}, may be used as a parameter related to the shrinkage characteristic (specific volume difference). Similar effects can be obtained by estimating the shrinkage characteristic (specific volume difference) in this way. $Shrinkage characteristics ∝ \left({P}_{5}-{P}_{6}\right) / {W}_{A}$

The method of the present Example can be applied to the estimation of the shrinkage characteristic of the resin material in Example 1, and the molding conditions can be changed based on the obtained estimated value.

In the above example, the estimation of shrinkage characteristic is performed based on (P₅ - P₆)/Vi or (P₅ - P₆)/W_{A}. However, where the shrinkage characteristic is estimated based on the relationship or ratio of P₅, P₆, and Vi or W_{A} other relationships can be used. For example, a value obtained by replacing P₅ - P₆ with αP₅ - P₆ or P₅ - βP₆ may be used, or a value obtained by adding a constant to at least one of the denominator or numerator may be used. In addition to these, the viscosity may be estimated using values that include components of P₅ - P₆, (P₅ - P₆)/Vi, or (P₅ - P₆)/W_{A} through equation transformation.

### <Example 6>

The present Example aims to accurately determine the relationship between material properties and molding conditions through analysis based on beforehand measurements, thereby enabling more accurate estimation of material properties. An example of beforehand measurement is measurement during a test run before mass production.

In Example 1, an example was described in which molding conditions (explanatory variables) for obtaining the target material properties (objective variables) were derived using equations (3) and (4), and equation (5). However, to obtain highly accurate explanatory variables, the constants included in equations (3) to (5) need to be realistic. Therefore, Example 6 describes a procedure for deriving realistic constants.

In the present Example, an analysis step is executed to determine the relationship between material properties and molding conditions before the first injection molding, and the molding conditions are set using the determined relationship. The analysis step can be performed, for example, in a pre-production test run. The pre-production test run is performed after the mold fabrication is completed and the mass production environment, such as the molding machine and temperature controller, is determined. The test environment is the same as the mass production environment. Furthermore, a mold and injection molding machine equipped with sensors as shown in Fig. 12(a) are used. However, the analysis step may be performed using test equipment separate from the equipment used for mass production.

The analysis step involves performing injection molding under a plurality of different conditions. The molding conditions follow the explanatory variables in equations (3) to (5). That is, since the explanatory variables consist of t (resin temperature), d (injection speed), and p (pressure), molding is performed by setting these to a plurality of different values. Typically, molding is performed by varying the explanatory variables at two to three levels. In the analysis step, the material properties are measured when molding under different conditions and the measurement results are used to determine the relationship between the material properties and the molding conditions.

Fig. 21 shows the settings for Test Example 5 in which the molding conditions were varied in a preliminary test run. A HIPS material was used as the resin material, and molding was performed under the environment illustrated by Fig. 12(a). The resin temperature conditions were varied from 200°C to 230°C, and the injection speed was varied from 20 mm/s to 40 mm/s. In Test Example 5, the pressure was adjusted by changing the VP position, and it was changed within the range of 8 mm to 12 mm.

Figs. 22(a) to 22(e) show the estimation results of the material properties obtained in Test Example 5. The estimated values of elastic modulus, viscosity, and shrinkage characteristic were obtained using the methods described in Examples 2 to 5. As can be seen from these results, each material property shows a generally linear change with respect to the molding conditions. That is, the constants included in equations (3) to (5) can be extracted from the linear approximation equation.

As described above, by performing test runs in the same environment as mass production, it is possible to construct a relational equation between material properties and molding conditions that matches reality. By using this numerical equation during mass production, higher molding quality can be obtained. While the relationship between material properties and molding conditions is used in the form of a relational equation here, this relationship may also be stored and used in the form of a LUT (Look Up Table).

The preliminary analysis can be performed at any time before the relationship between material properties and molding conditions, as determined by the analysis, is used for control. In other words, "preliminary" can refer to any time before the first injection molding operation. For example, the above analysis may be performed not only during preliminary test runs but also during mass production. This is because there may be differences in material properties between the materials used in the test runs and the materials used during mass production. In the present disclosure, the relationship between material properties and molding conditions is continuously updated based on the molding results of the injection molding operation. Continuous updating may be performed for each injection molding operation, for a plurality of injection molding operations, or at any other arbitrary timing. In the present disclosure, since the estimation of material properties and the modification (correction) of molding conditions are continuously performed even during mass production, it is possible to continuously increase the number of plotted points in the diagram shown in Fig. 24. Therefore, the linear equation can be updated to a highly accurate one with a large number of measurement points.

### <Example 7>

The accuracy of the control process of the injection molding machine described in Examples 1 to 6 may decrease due to various factors. For example, this may occur if the number of sensors for collecting process data is insufficient due to mold specifications, or if sensors cannot be installed at the desired locations. In such situations, errors occur in the calculation of material property estimation and the calculation for condition correction. Also, while a linear trend was observed between molding conditions and material properties in Example 6, non-linear behavior may occur for various reasons. In such situations, the accuracy of the calculation for material property estimation and molding condition correction also decreases.

The present Example solves these problems using machine learning. Machine learning can perform processing and analysis on a scale that exceeds human thinking levels, so if a large amount of information can be collected, it becomes possible to predict the situation with high accuracy.

In the present Example, the material property calculation unit 53 and the control amount calculation unit 55 shown in Fig. 2 are implemented using a prediction model constructed based on machine learning. Therefore, the present Example further includes a learning step in which injection molding is performed under a plurality of different conditions, the material properties at this time are measured, and a model of the relationship between material properties and molding conditions is learned. The prediction model learning processing used in the material property calculation unit 53 is performed using learning data consisting of pairs of process data and material properties obtained during injection molding. The learning data are acquired by executing injection molding under a plurality of different molding conditions in advance (before the first injection molding) and acquiring the process data and material properties at that time. The pairs of process data and material properties obtained in this way are handled as learning data. Furthermore, the learning processing for the prediction model used in the control amount calculation unit 55 is performed using learning data consisting of pairs of material property estimated values and molding conditions. The learning data are acquired by executing injection molding under a plurality of different molding conditions in advance (before the first injection molding) and obtaining the estimated material properties and molding conditions at that time. The pairs of estimated material properties and molding conditions obtained in this way are used as learning data.

By using these learning data and applying machine learning algorithms, the prediction models of the material property calculation unit 53 and the control amount calculation unit 55 can be trained. For the machine learning model, supervised regression analysis of learning can be used, and examples thereof include linear regression, SVM regression, random forest, neural network, and deep neural network.

The prediction model of the material property calculation unit 53 takes process data as input and outputs the material properties of the resin material in the process. The control amount calculation unit 55 takes the estimated material properties as input and outputs the molding conditions (or adjustment amounts) to obtain the desired material properties. A prediction model is learned by inputting the material properties and outputting the molding conditions for obtaining those material properties.

Furthermore, it is preferable that this machine learning prediction model be updated during mass production. Since machine learning tends to be more accurate with a larger amount of learning data, the control system can be improved by continuously learning through online learning during mass production and rewriting the prediction model. The present Example may further include an update step for acquiring learning data in every cycle during mass production, performing learning continuously through online learning using the acquired learning data, and updating the prediction model. It is not necessary to perform learning in every cycle; where the model can be updated using data obtained from injection molding after the learning model has been learned (generated) once, the interval of retraining thereof is not particularly limited.

### <Example 8>

A method for determining quality using the technique of the present disclosure will be described hereinbelow.

In steps ST8 and ST9 of the control flow shown in Fig. 3, it is determined whether the material properties are within acceptable values. If it is determined at this time that the material properties are outside the acceptable values, the system issues a warning to determine the quality of the molding. Steps ST8 and ST9 can be considered as determination steps for determining whether an injection-molded product is good or defective based on whether a plurality of parameters related to a plurality of material properties falls within preset appropriate ranges.

To determine whether a product is good or defective, it is necessary to determine threshold values in advance. A method for deriving the threshold values experimentally and a method for deriving the threshold values by analyzing the relationship between material properties and molding quality with analysis software can be considered. There is also a method of setting threshold values based on past production results.

It is preferable to determine whether a product is good or defective for each estimated material property. For example, even if the determination for the elastic modulus is acceptable, where the determination for viscosity is unacceptable, the molding quality may be considered unacceptable. Basically, it is better to consider the molding quality as unacceptable if even one of the material properties is unacceptable.

Furthermore, it is preferable that the material properties used to determine whether a product is good or defective include at least elastic modulus, viscosity, and shrinkage characteristic. In this case, accurate material property estimation and good/defective determination based thereon become possible with representation using the input values (estimated values) and threshold values of the elastic modulus, viscosity, and shrinkage characteristic and the parameters shown in Examples 2 to 5.

### <Example 9>

A material property monitoring system using the technique of the present disclosure will be described hereinbelow.

With the injection molding system shown in Figs. 1 to 3, it is possible to control the injection molding machine 10 fully automatically. However, by having the operator check various types of information obtained during the control process, it becomes possible to use this information for phenomenon analysis and improvement of work efficiency.

The present Example further includes a display step for displaying a plurality of parameters related to a plurality of material properties on a monitor. For example, if the estimated material properties are displayed in real time on a monitor provided for both the injection molding machine 10 and the control device 51, it is possible to manage the physical properties of the delivered materials. Furthermore, it becomes possible to utilize material properties in elemental research.

The monitor may be placed in a remote location different from the installation location of the injection molding machine 10, so that the above information can be checked remotely. Where mass production results can be managed remotely, information from multiple locations can be organized simultaneously.

In addition, it is preferable that the information be automatically stored on a server or the like for a certain period of time and could be freely retrieved afterward. Therefore, the present Example preferably further includes a storage step for storing a plurality of parameters related to a plurality of material properties in a storage medium.

It is also desirable that the operator could manually rewrite the molding conditions based on the measurement results, instead of performing fully automatic control.

### <Example 10>

The control cycle, that is, the change in molding conditions, can be arbitrarily set, such as for each resin lot or each production startup.

In the configuration shown in Figs. 1 to 3, the injection molding machine is controlled for each period of one cycle. However, since the material properties change significantly when the manufacturing lot of resin material is changed, sufficient effects can be obtained even by controlling within this period. Essentially, the molding conditions may be controlled with a period longer than one cycle and shorter than the manufacturing lot change period. It is preferable to have a function that allows the operators to set the control cycle themselves.

The present invention is not limited to the embodiment described above, and various modifications and amendments may be implemented thereon without departing from the spirit and scope of the present invention. Accordingly, the following claims are attached in order to publicize the scope of the present invention.

The present application claims priority on the basis of Japanese Patent Application No. 2023-191420, filed on November 9, 2023, and all of the contents disclosed therein are included by reference.

### [Reference Signs List]

- 1: Mold
- 10: Injection molding machine
- 11: Plasticizing device
- 12: Mold clamping device
- 51: Control device
- 52: Data detection unit
- 53: Material property calculation unit
- 54: Comparison unit
- 55: Control amount calculation unit
- 61: Mold sensor
- 62: Second pressure sensor
- 63: Resin temperature sensor
- 71: Cylinder sensor
- 72: First pressure sensor
- 81: Measuring machine

## Claims

1. A control method for an injection molding machine, which is a control method for a manufacturing apparatus executed by a control device,
the manufacturing apparatus including the injection molding machine and a mold attached to the injection molding machine,
the control method comprising:
a collection step for collecting a plurality of process data measured during a first injection molding from a plurality of sensors provided to the manufacturing apparatus;
an acquisition step for acquiring a plurality of parameters related to a plurality of material properties of a resin material used in injection molding, based on the process data; and
a control step for setting molding conditions for a second injection molding that follows the first injection molding, based on the plurality of parameters.

2. The control method for an injection molding machine according to claim 1, wherein
in the control step, the molding conditions for the second injection molding are set using a system of equations including relational equations between adjustment amounts of the molding conditions and changes in the parameter, which are predetermined for each of the plurality of parameters.

3. The control method according to claim 1, wherein
the plurality of material properties include at least two material properties among viscosity, elastic modulus, and shrinkage characteristic.

4. The control method according to claim 1, wherein
the plurality of sensors include:
a sensor provided to the injection molding machine; and
a sensor provided to the mold.

5. The control method according to claim 1, wherein
the plurality of sensors include:
a pressure sensor; and
a temperature sensor.

6. The control method according to claim 1, wherein
the plurality of parameters related to material properties include
at least two parameters among:
a first parameter based on a difference P₁ - P₂ between a first pressure sensor value P₁ in a resin flow path within a plasticizing section of the injection molding machine and a second pressure sensor value P₂ in a resin flow path inside the mold, when a temperature of the resin material in the mold is at least a glass transition temperature Tg during an injection step and a holding pressure step;
a second parameter based on a screw pressurization force value Ps of the injection molding machine and a pressure sensor value P₃ of the resin material in the mold when the temperature of the resin material in the mold has decreased to not more than Tg + 10°C during the holding pressure step, or based on a change amount ΔLs of a screw position in the injection molding machine and a change amount ΔP₄ of the pressure sensor value during the injection step; and
a third parameter based on a pressure sensor value P₅ in the resin flow path inside the mold when a mold gate is sealed, a pressure sensor value P₆ in the resin flow path inside the mold when a molded product reaches a temperature not more than a load deflection temperature, and an injection volume Vi or a molded product weight W_{A} during the holding pressure step and a cooling step.

7. The control method according to claim 6, wherein
at least any of following conditions is met:
the first parameter is based on a relationship between P₁ and P₂;
the second parameter is based on a relationship between P₃ and Ps;
the second parameter is based on a relationship between ΔLs and ΔP₄;
the third parameter is based on a relationship between P₅, P₆, and Vi; and
the third parameter is based on a relationship between P₅, P₆, and W_{A}.

8. The control method according to claim 6, wherein
at least any of following conditions is met:
the first parameter is based on a relationship corresponding to a divergence between P₁ and P₂;
the second parameter is based on a relationship corresponding to a ratio of Ps to P₃;
the second parameter is based on a relationship corresponding to a ratio of ΔP₄ to ΔLs;
the third parameter is based on a relationship corresponding to a ratio of a divergence between P₅ and P₆ to Vi; and
the third parameter is based on a relationship corresponding to a ratio of a divergence between P₅ and P₆ to W_{A}.

9. The control method according to claim 1, wherein
the plurality of parameters related to the material properties include
at least two parameters among:
a viscosity-related parameter, which is a value corresponding to a difference P₁ - P₂ between a first pressure sensor value P₁ in a resin flow path within a plasticizing section of the injection molding machine and a second pressure sensor value P₂ in a resin flow path inside the mold, when a temperature of the resin material in the mold is at least a glass transition temperature Tg during an injection step and a holding pressure step;
an elastic modulus-related parameter, which is a value corresponding to a ratio Ps/P₃ of a screw pressurization force value Ps of the injection molding machine to a pressure sensor value P₃ of the resin material in the mold when the temperature of the resin material in the mold has decreased to not more than Tg + 10°C during the holding pressure step, or a value corresponding to a ratio ΔP₄/ΔLs of a change amount ΔP₄ of the pressure sensor value within the mold to a change amount ΔLs of a screw position of the injection molding machine during the injection step; and
a shrinkage characteristic-related parameter, which is a value corresponding to a value (P₅ - P₆)/Vi or (P₅ - P₆)/W_{A}, which is obtained by dividing a pressure sensor value P₅ in the resin flow path inside the mold when a mold gate is sealed and a pressure sensor value P₆ in the resin flow path inside the mold when a molded product reaches a temperature not more than a load deflection temperature during the holding pressure step and a cooling step by an injection volume Vi or a molded product weight W_{A}.

10. The control method according to claim 1, further comprising
an analysis step for performing injection molding under a plurality of different conditions before the first injection molding, and measuring the material properties at that time, and moreover determining a relationship between the material properties and the molding conditions, wherein
in the control step, the molding conditions based on the plurality of parameters are set by using the relationship obtained in the analysis step.

11. The control method according to claim 10, further comprising a step for continuously updating the relationship based on molding results of the injection molding.

12. The control method according to claim 1, further comprising
a learning step for performing injection molding under a plurality of different conditions before the first injection molding, and measuring the material properties at that time, and moreover learning a model of a relationship between material properties and molding conditions, wherein
in the control step, the molding conditions based on the plurality of parameters are set by using the model.

13. The control method according to claim 12, further comprising
a step for updating the model on a basis of results of the second injection molding.

14. The control method according to claim 1, further comprising
a determination step for determining whether an injection molded product is a good product or a defective product on a basis of whether the plurality of parameters related to the plurality of material properties fall within preset appropriate ranges.

15. The control method according to claim 1, further comprising
a display step for displaying on a monitor the plurality of parameters related to the plurality of material properties.

16. The control method according to claim 1, further comprising
a storage step for storing in a storage medium the plurality of parameters related to the plurality of material properties.

17. The control method according to claim 1, wherein
the collection step, the acquisition step, and the control step are performed each time a manufacturing lot of the resin material is changed.

18. The control method according to claim 1, wherein
the collection step, the acquisition step, and the control step are performed each time the manufacturing apparatus is started up.

19. A control method for a manufacturing apparatus executed by a control device,
the manufacturing apparatus including an injection molding machine and a mold attached to the injection molding machine,
the control method comprising:
a collection step for collecting a first pressure sensor value obtained from a first pressure sensor provided in a plasticizing section of the injection molding machine, a second pressure sensor value obtained from a second pressure sensor provided in a resin flow path inside a mold, and a temperature sensor value obtained from a temperature sensor that is provided near the second pressure sensor and detects a temperature of a resin material; and
a control step for setting molding conditions for injection molding on a basis of a relationship between a first pressure sensor value P₁ and a second pressure sensor value P₂ when the temperature sensor value is at least a glass transition temperature Tg of the resin material during an injection step and a holding pressure step in injection molding.

20. The control method according to claim 19, wherein
the relationship is a relationship corresponding to a divergence between P₁ and P₂.

21. The control method according to claim 19, wherein
the relationship is a relationship corresponding to a difference between P₁ and P₂.

22. The control method according to claim 19, wherein
in the control step, molding conditions for injection molding are set based on the first pressure sensor value and the second pressure sensor value when a rate of change over time of both the first pressure sensor value and the second pressure sensor value is within 5 MPa/sec during the injection step and holding pressure step.

23. A control method for a manufacturing apparatus executed by a control device,
the manufacturing apparatus including an injection molding machine and a mold attached to the injection molding machine,
the control method comprising:
a collection step for collecting a pressure sensor value obtained from a pressure sensor provided in a resin flow path inside the mold, a temperature sensor value obtained from a temperature sensor that is provided near the pressure sensor and detects a temperature of a resin material, and a screw pressurization force value of the injection molding machine; and
a control step for setting molding conditions for injection molding based on a relationship between a pressure sensor value P₃ and a screw pressurization force value Ps of the injection molding machine when the temperature sensor value decreases to not more than Tg + 10°C during a holding pressure step in injection molding, the Tg being a glass transition temperature of the resin material.

24. The control method according to claim 23, wherein
the relationship is a relationship corresponding to a ratio of Ps to P₃.

25. A control method for a manufacturing apparatus executed by a control device,
the manufacturing apparatus including an injection molding machine and a mold attached to the injection molding machine,
the control method comprising:
a collection step for collecting a pressure sensor value obtained from a pressure sensor provided in a resin flow path inside the mold and a screw position of the injection molding machine; and
a control step for setting molding conditions for injection molding on the basis of a relationship between a change amount ΔLs of the screw position and a change amount ΔP₄ of the pressure sensor value during an injection step in injection molding.

26. The control method according to claim 25, wherein
the relationship is a relationship corresponding to a ratio of ΔP₄ to ΔLs.

27. A control method for a manufacturing apparatus executed by a control device,
the manufacturing apparatus including an injection molding machine and a mold attached to the injection molding machine,
the control method comprising:
a collection step for collecting a pressure sensor value obtained from a pressure sensor provided in a resin flow path inside the mold, and a temperature sensor value obtained from a temperature sensor that is provided near the pressure sensor and detects a temperature of a resin material; and
a control step for setting molding conditions for injection molding on a basis of a relationship between a pressure sensor value P₅ when a gate of the mold is sealed, a pressure sensor value P₆ when a molded product reaches a temperature not more than a load deflection temperature, and an injection volume Vi during a holding pressure step and a cooling step in injection molding.

28. The control method according to claim 27, wherein
the relationship is a relationship corresponding to a ratio of a divergence between P₅ and P₆ to Vi.

29. The control method according to claim 27, wherein
the relationship is a relationship corresponding to a ratio of a difference between P₅ and P₆ to Vi.

30. A control method for a manufacturing apparatus executed by a control device,
the manufacturing apparatus including an injection molding machine and a mold attached to the injection molding machine,
the control method comprising:
a collection step for collecting a pressure sensor value obtained from a pressure sensor provided in a resin flow path inside the mold, and a temperature sensor value obtained from a temperature sensor that is provided near the pressure sensor and detects a temperature of a resin material; and
a control step for setting molding conditions for injection molding on a basis of a relationship between a pressure sensor value P₅ when a gate of the mold is sealed, a pressure sensor value P₆ when a molded product reaches a temperature not more than a load deflection temperature, and a molded product weight W_{A} during a holding pressure step and a cooling step in injection molding.

31. The control method according to claim 30, wherein the relationship is a relationship corresponding to a ratio of a divergence between P₅ and P₆ to W_{A}.

32. The control method according to claim 30, wherein
the relationship is a relationship corresponding to a ratio of a difference between P₅ and P₆ to W_{A}.

33. A manufacturing method for an injection-molded product, the method comprising:
a step for preparing a manufacturing apparatus including an injection molding machine and a mold attached to the injection molding machine;
a step for injection molding a resin material into the mold by using the injection molding machine; and
a step for removing the injection-molded product from the mold, wherein
the manufacturing apparatus is controlled by the control method according to any one of claims 1 to 31.

34. The manufacturing method for the injection-molded product according to claim 33, wherein the resin material is a recycled resin material.

35. A system comprising:
a manufacturing apparatus including an injection molding machine and a mold attached to the injection molding machine; and
a control device, wherein
the control device controls the manufacturing apparatus by the control method according to any one of claims 1 to 32.
